# EUROPÄISCHE PATENTSCHRIFT

(11) **EP 1 289 732 B1**
(45) Veröffentlichungstag und Bekanntmachung des Hinweises auf die Patenterteilung: **03.08.2005**
(21) Anmeldenummer: 01951342.3
(22) Anmeldetag: 21.05.2001
(51) Int. Cl.: B29C 45/56, B29C 67/24, B29K 23/00

(54) **SPRITZPRESSMASSE UND FORMKÖRPER**
COMPRESSION INJECTION MOLDING COMPOUND AND MOULDED ARTICLE
MATERIAU DE MOULAGE PAR INJECTION ET TRANSFERT ET CORPS MOULE

(30) Priorität: 31.05.2000 DE 10027209
(43) Veröffentlichungstag der Anmeldung: 12.03.2003
(73) Patentinhaber: G.I.A. Holding AG, 2000 Stockerau (AT)
(72) Erfinder: RÜTTNAUER, Rochus, C., 94405 Landau (DE); SCHNIEDERMEIER, Jürgen Dr., 94405 Landau (DE); NADAY, Peter, 95500 Heinersreuth (DE)
(74) Vertreter: Naefe, Jan Robert
(86) Internationale Anmeldenummer: PCT/DE2001/001905
(87) Internationale Veröffentlichungsnummer: WO 2001/091988

(56) Entgegenhaltungen:
- EP-A- 0 433 976
- EP-A- 0 572 946
- EP-A- 0 640 458
- EP-A- 0 666 285
- EP-A- 0 738 661
- EP-A- 0 906 817
- DE-A- 3 610 822
- DE-A- 4 307 795
- US-A- 4 461 871
- US-A- 5 277 479
- US-A- 5 436 296
- KALFOGLOU N K ET AL: "Comparison of compatibilizer effectiveness for PET/HDPE blends" POLYMER, ELSEVIER SCIENCE PUBLISHERS B.V, GB, vol. 36, no. 23, 1 November 1995 (1995-11-01), pages 4453-4462, XP004025476 ISSN: 0032-3861
- Y. PIETRASANTA: "Reactive copatibilization of HDPE/PET blends by glycidyl methacrylate functionalized polyolefins" MACROMOLECULAR CHEMISTRY AND PHYSICS., vol. 200, no. 1, January 1999 (1999-01), pages 142-149, XP002179543 WILEY VCH, WEINHEIM., DE ISSN: 1022-1352
- PATENT ABSTRACTS OF JAPAN vol. 1997, no. 12, 25 December 1997 (1997-12-25) & JP 09 208814 A (MITSUBISHI CHEM CORP), 12 August 1997 (1997-08-12)
- TSIOURVAS D ET AL: "A NEW APPROACH TO RECLAIMED PET UTILIZATION-BLENDS OF RECYCLED PET SUITABLE FOR EXTRUSION BLOW-MOLDING TECHNOLOGY" ADVANCES IN POLYMER TECHNOLOGY, JOHN WILEY AND SONS, CHICHESTER, GB, vol. 14, no. 3, 21 September 1995 (1995-09-21), pages 227-236, XP000518937 ISSN: 0730-6679

## Beschreibung

Die Erfindung betrifft eine Spritzpressmasse, welche eine Polyestermischung ist sowie einen Formkörper aus der Polyestermischung.

Spritzpressmassen sind üblicherweise Duroplaste.

Formkörper aus thermoplastischen Massen, wie zum Beispiel Polyester-Mischungen, werden dagegen durch Spritzgieß-Verfahren hergestellt Dabei wird die thermoplastische Formmasse bis zur Verflüssigung erwärmt und dann unter hohem Druck (1000-2000 bar) in geschlossene zweiteilige, d.h. aus Gesenk und Kern bestehende, stähleme, wassergekühlte Formen gespritzt, wo sie abkühlen und erstarren. Nachteilig bei den auf diese Weise hergestellten Formkörpern ist jedoch, dass aufgrund der hohen, beim Spritzgießen aufgewendeten Drücke die Masse beim Abkühlen in den Formen einem erheblichen Materialstress ausgesetzt ist und nicht spannungsfrei erstarrt, so dass die resultierenden Formkörper schlagempfindlich sind.

Aus der US 4461871 ist eine Polyesterzusammensetzung bekannt, welche einen aromatischen Polyester, ein Copolymer eines α-Olefins und ein Glycidylester einer α-, β-ethylenisch ungesättigten Karboxylsäure und ein ethylenbasiertes Copolymer eines Ethylens und α-Olefins mit mehr als drei Karbonatomen enthält. Die Zusammensetzung hat einen verbesserten Eindringwiderstand bei niedrigen Temperaturen und gute Fließeigenschaften beim Spritzgießen.

Das Dokument Polymer, Volume 36, Nr. 23 1995, Seiten 4453 bis 4462 befasst sich mit der Effizienz von vier verschiedenen Verträglichmachern, die mit einem Polyethylenterephtalat/HD-Polyethylen (PET/HDPE) vermischt wurden. Es ist hieraus bekannt, als Verträglichmacher E-GMA, E-EA-GMA, SEBS-g-MA und E-MeA-g-MA zu verwenden.

Aus Makromol. Chem. Phys. Volume 200, Nr. 1. 1999, Seiten 142 - 149 ist es bekannt, Mischungen aus HDPE und PET in verschiedenen Gewichtszusammensetzungen mit Glycidylmethacrylat funktionalisierten Polyolefinen zu modifizieren. Die Verträglichmacher, die hierbei verwendet wurden, waren E/GMA und E/EA/GMA.

Aus der JP-A-9208814 ist es bekannt, ein Polyethylenterephtalatharz mit Glasfasern zu versetzen und als Spritzgießmasse zu verwenden. Die Glasfasern haben einen Gewichtsanteil von 1 - 25 Gewichts-Prozent der gesamten Mischung.

Aus der EP 0738661B1 ist ein Verfahren zur Herstellung einer einteiligen, zwei Decks und zwischen den Decks Säulen sowie zwischen den Säulen Passagen aufweisenden Doppelkreuzpalette aus Kunststoff im Spritzpressverfahren bekannt.

Aufgabe der vorliegenden Erfindung ist es daher, eine Spritzpressmasse bereitzustellen, mit der ein Formkörper aus einer thermoplastischen Masse hergestellt werden kann, der eine verbesserte Schlagzähigkeit aufweist, und bei dem gleichzeitig die Materialeigenschaften des Formkörpers beeinflussende Abbaureaktionen in der thermoplastischen Masse vermieden werden.

Der Erfindung liegt die Erkenntnis zugrunde, dass sich ein Formkörper mit den gewünschten Eigenschaften herstellen lässt, indem einer thermoplastischen Masse eine reaktive Komponente zugesetzt wird und die Masse anschließend unter geringem Druck verarbeitet wird.

Gegenstand der Erfindung ist eine Spritzpressmasse gemäß dem Anspruch 1, welche
eine Polyester-Mischung mit einer Charpy-Schlagzähigkeit von mindestens 40 mJ/mm^{2,} mit folgenden Bestandteilen in Gewichtsprozent ist:
60 - 80% Polyester,
10 - 30% Polyolefin,
1- 10% Ethylen-Glycidylmethacrylat Copolymer,
0 - 3% Ethylen-Vinylacetat Copolymer,
0 bis 2% Kettenverzweiger bzw. Viskositätserhöher,
   und
0,5 -15 % thermoplastisches Elastomer auf metallocen-Olefinbasis

Die Masse kann zusätzlich
bis zu 1 % Additive,
bis zu 3% Schäummittel und
bis zu 40% anorganische Füllmaterialien
enthalten.

Die Angaben in Gewichtsprozent sind so zu verstehen, dass sich die Anteile der einzelnen Bestandteile der Polyester-Mischung zu 100% addieren. Die Angaben für die optionalen zusätzlichen Komponenten sind dagegen bezogen auf 100% der Polyester-Mischung, d.h. 100 Teilen der Polyestermischung können z.B. bis zu 3 Teile eines Schäummittels zugesetzt werden.

Gegenstand der Erfindung ist ferner ein spritzgepresster Formkörper aus der erfindungsgemäßen Spritzpressmasse gemäß dem Anspruch 11.

Die erfindungsgemäße Spritzpressmasse hat den großen Vorteil, dass die hergestellten Formkörper eine verbesserte Schlagzähigkeit aufweisen. Dies ist insbesondere dann besonders vorteilhaft, wenn die Formkörper in Bereichen eingesetzt werden sollen, wo sie regelmäßig Schlägen, Erschütterungen oder anderen mechanischen Beanspruchungen ausgesetzt werden, wie dies z.B. beim Transport verschiedener Waren auftritt.

Ein weiterer Vorteil der Erfindung besteht darin, dass Abbaureaktionen in der thermoplastischen Masse bei der Herstellung des Formkörpers weitgehend unterdrückt werden. Solche Abbaureaktionen treten auf, wenn versucht wird, thermoplastische Massen auf der Basis von Polyester-Mischungen durch Spritzpressen zu verarbeiten. Abbaureaktionen verschlechtern die Materialeigenschaften der hergestellten Formkörper und lassen sich zum Teil bereits optisch durch eine auftretende Verfärbung der Produkte nachweisen. Die Abbaureaktionen sind vermutlich auf einen thermischen Abbau der Polyesterkomponente in der Polyester-Mischung zurückzuführen. Abgesehen davon, dass die genannten Verfärbungen unerwünscht sind, weil sie dem Betrachter den Eindruck verleihen, es handele sich um minderwertige Produkte, werden durch die Abbaureaktionen auch die mechanischen Eigenschaften der hergestellten Formkörper beeinflusst. Mit Hilfe der Variation der Anteile der einzelnen Komponenten der Polyester-Mischung lassen sich Formkörper mit den gewünschten Materialeigenschaften, wie zum Beispiel Biegefestigkeit oder Elastizitätsmodul herstellen. Durch den Abbau der Polyesterkomponente wird jedoch die Zusammensetzung der thermoplastischen Masse verändert, so dass auch die Eigenschaften der resultierenden Formkörper negativ beeinflusst werden. Beim Spritzgießen treten solche Abbaureaktionen nicht oder nur untergeordneterem Maße auf, was vermutlich darauf zurückzuführen ist, dass die Verarbeitung der thermoplastischen Masse rascher erfolgt, da die Masse unter hohem Druck in die Formen eingespritzt wird. Es ist daher wünschenswert, solche Abbaureaktionen auch beim erfindungsgemäß verwendeten Spritzpressen von thermoplastischen Massen zu vermindern bzw. zu unterdrücken.

Überraschenderweise gelingt dies durch die erfindungsgemäße Verwendung einer Polyester-Mischung, die neben 60-80 Gewichtsprozent Polyester und 10-30 Gewichtsprozent Polyolefin und 0.5 - 15 Gew.-% thermoplastisches Elastomer auf metallocen-Olefinbasis, ferner 1-10 Gew.-% Ethylen-Glycidylmethacrylat Copolymer enthält. Durch das Ethylen-Glycidylmethacrylat Copolymer wird die Polyesterkomponente stabilisiert und die unerwünschten Abbaureaktionen werden fast vollständig unterdrückt. Die Stabilisierung der Polyester-Mischung wird unter anderem darauf zurückgeführt, dass das Ethylen-Glycidylmethacrylat Copolymer mit der Polyester-Mischung reagiert (reaktive Kompoundierung), wobei es zu einer innigen Mischung kommt. Gleichzeitig bewirkt die innige Mischung eine Herabsetzung der Sprödigkeit der resultierenden Formkörper und somit eine verbesserte Schlagzähigkeit. Die Verwendung von Ethylen-Glycidylmethacrylat Copolymer ist ferner besonders vorteilhaft, weil durch die reaktive Kompoundierung der Polyester-Mischung die rheologischen Fließeigenschaften der thermoplastischen Masse verändert werden. Ein höherer Anteil an Ethylen-Glycidylmethacrylat Copolymer erhöht die Dickflüssigkeit der Schmelze, was von Vorteil sein kann, da sich dünnflüssige Schmelzen bei bestimmten Werkzeugkonfigurationen beim Verpressen wesentlich schwieriger verarbeiten lassen. Gleichzeitig steigt durch die reaktive Kompoundierung der Wert für die intrinsische Viskosität an, wodurch wiederum die Materialeigenschaften der aus der erfindungsgemäßen Spritzpressmasse hergestellten Formkörper, insbesondere deren Festigkeit und Schlagzähigkeit, verbessert werden.

Die verwendete Polyester-Mischung kann ferner bis zu 3 Gew.-% Ethylen-Vinylacetat Copolymer enthalten. Durch den Zusatz von Ethylen-Vinylacetat Copolymer lassen sich die vorteilhaften Effekte des Ethylen-Glycidylmethacrylat Copolymers noch verstärken.

Ein weiterer vorteilhafter Effekt der erfindungsgemäßen Spritzpressmasse eines Formkörpers besteht darin, dass die in der erfindungsgemäß verwendeten thermoplastischen Masse enthaltenen Copolymere Ethylen-Glycidylmethacrylat Copolymer und wahlweise auch Ethylen-Vinylacetat Copolymer gleichzeitig als Verträglichmacher wirken.
Die Copolymere sind geeignet, die Mischungslücke zwischen Polyester und Polyolefin zu schließen, und somit die Verarbeitung der thermoplastischen Masse zu einem einheitlichen Formkörper zu unterstützen.

Vorteilhafterweise kann die thermoplastische Masse, die bei einem Verfahren zum Spritzpressen eines Formkörpers verwendet wird, weitere Bestandteile enthalten bzw. können der thermoplastischen Masse weitere Bestandteile zugesetzt werden. So kann die thermoplastische Masse bis zu 2 % Kettenverzweiger bzw. Viskositätserhöher enthalten, um die Viskosität der thermoplastischen Masse und den Verzweigungsgrad des hergestellten Formkörpers auf einen gewünschten Wert einzustellen.

Ferner können der thermoplastischen Masse zusätzlich bis zu 3 % Schäummittel und bis zu 1 % weitere Additive zugesetzt werden, die zum Beispiel dazu dienen können, eine verbesserte Oxidationsstabilität oder UV-Stabilität zu erreichen. Weiterhin können der thermoplastischen Masse bis zu 40 % anorganische Füllmaterialien, wie zum Beispiel Glasfasern, zugesetzt werden.

Die erfindungsgemäße Spritzpressmasse zum Spritzpressen eines Formkörpers enthält mindestens 0,5 Gew.-%, insbesondere 1 bis 10 Gew.-%, und ganz besonders bevorzugt 5 - 10 Gew.-%, thermoplastisches Elastomer auf metallocen-Olefinbasis. Mit Hilfe dieser thermoplastischen Elastomere auf metallocen-Olefinbasis (TPE-O) läßt sich die Schlagzähigkeit der resultierenden Formkörper sehr stark erhöhen. Schon geringe Gehalte der thermoplastischen Elastomere von wenigen Gew.-% (z.B. > 0,5 Gew.-% oder 2 oder 3 Gew.-%) bewirken eine signifikante Erhöhung der Schlagzähigkeit. Höhere Gehalte von 5 oder 7 bis 10 Gew-% verstärken den auftretenden Effekt. Es sind auch Gehalte von bis zu 15 Gew.-% möglich.

Auf diese Weise ist es möglich, die erfindungsgemäße Spritzpressmasse eines Formkörpers auch unter Verwendung von recycelten Kunststoffmaterialien auszubilden und gleichzeitig Formkörper, z.B: Platten oder Paletten, mit hervorragender Schlagzähigkeit zu erhalten. Es können recycelte Polyolefine verwendet werden, die z.B. aus Verbundmaterialien, Flaschenkastenmahlgut oder hochmolekularem HDPE gewonnen werden. Auch Verbundfolie mit niedrigen Anteilen an Verunreinigungen kann auf diese Weise so verarbeitet werden, daß Verunreinigungen kann auf diese Weise so verarbeitet werden, daß Formkörper mit einer hohen Schlagzähigkeit erhalten werden. Durch die Verwendung der thermoplastischen Elastomere auf metallocen-Olefinbasis läßt sich die Verschlechterung der Eigenschaften der resultierenden Formkörper durch im recyceltem Ausgangsmaterial enthaltene Verunreinigungen kompensieren. Auf diese Weise können kostengünstige Ausgangsmaterialien zu Produkten mit hervorragenden Eigenschaften verarbeitet werden. Die Verarbeitung von Recycling-Werkstoffen zu hochwertigen Produkten ist ein aktuelles Problem, da eine immer größere Zahl von Kunststoffen der Wiederverarbeitung zugeführt wird, sich andererseits die Recycling-Materialien in der Regel aber nicht zu hochwertigen Endprodukten verarbeiten lassen. Dies gelingt nunmehr mit der erfindungsgemäßen Spritzpressmasse zum Spritzpressen eines Formkörpers unter Verwendung thermoplastischer Elastomere auf metallocen-Olefinbasis.

Die Verbesserung der Eigenschaften der resultierenden Formkörper durch die Verwendung thermoplastischer Elastomere auf metallocen-Olefinbasis ist selbstverständlich aber auch bei der Verwendung reiner Ausgangsmaterialien von Vorteil, wenn es gilt besonders anspruchsvolle Formkörper mit hervorragendem Eigenschaftsprofil herzustellen.

Sehr gut geeignet zur Verwendung bei der erfindungsgemäßen Spritzpressmasse sind thermoplastische Elastomere auf metallocen-Olefinbasis (TPE-O). Ein besonders gut geeignetes thermoplastisches Elastomer auf Polyethylenbasis ist Engage™ 8180 von Dupont-Dow (Ethylen-1-Olefin-Copolymer).

Die thermoplastische Masse kann als Ganzes unter Wärmeeinwirkung plastisch erweicht werden. Es ist aber auch möglich, z.B. den Polyester alleine zu plastifizieren und HDPE und Ethylen-Glycidylmethacrylat sowie eventuelle weitere Komponenten in einem Beistellextruder zu plastifizieren und die beiden plastifizierten Massen anschließend zusammenzuführen.

Gemäß einer bevorzugten Ausführungsform der erfindungsgemäßen Spritzpressmasse zum Spritzpressen eines Formkörpers beträgt der Anteil an Polyester 64 - 80 Gew.-%, insbesondere 70 - 80 Gew.-%. Besonders bevorzugt sind Anteile von größer als 72 Gew.-% Polyester oder solche im Bereich von 72 - 78 Gew.-%.

Nach einer weiteren bevorzugten Ausführungsform der erfindungsgemäßen Spritzpressmasse enthält die thermoplastische Masse, die zum Spritzpressen des

Formkörpers verwendet wird, ein Polyalkylenterephthalat als Polyester. Es kommen beispielsweise Polyethylenterephthalt (PET), Polybutylenterephthalat, Polypropylenterephthalat, Polyethylenisophthalat, Poylethylen-2,6-naphthalat oder Poly(1,4-cyclohexandimethylenterephthalate (PCDT) in Betracht, von denen Polyethylenterephthalat besonders bevorzugt ist. Insbesondere bei Verwendung von Polyethylenterephthalat lassen sich Formkörper mit hoher Festigkeit, Steifheit und Maßbeständigkeit sowie hoher Chemikalienbeständigkeit herstellen. Die erfindungsgemäße Spritzpressmasse eignet sich auch zur Verwendung von recycleten Polyestern, wie z.B. post-consumer PET. Es können Polyester, insbesondere Polyalkylenterephthalate, mit einer intrinsischen Viskosität von 0,5 bis 1,1 dl/g verwendet werden. Der Wert für die intrinsische Viskosität, der sogenannte IV-Wert, steigt fast linear mit der Molmasse der Polymere an. Je höher der IV-Wert ist, desto höher ist die Molmasse, was zu einer Verbesserung der Eigenschaften des hergestellten Formkörpers führt. So bewirkt eine höhere Molmasse der Polyesterkomponente eine verbesserte Schlagzähigkeit der resultierenden Formkörper.

Nach einer weiteren bevorzugten Ausführungsform wird als Polyolefin in der thermoplastischen Masse Polyethylen verwendet Es können verschiedene Polyethylene verwendet werden, wobei Polyethylene, die aus Niederdruckverfahren gewonnen werden, bevorzugt verwendet werden. Diese als HDPE (high density polyethylene) bekannten Polyethylene sind weitgehend linear und unverzweigt, und zeichnen sich durch hohe Molmassen aus, was die Produkteigenschaften der resultierenden Formkörper, insbesondere deren Festigkeit, positiv beeinflußt. Statt HDPE können beispielsweise aber auch Produkte mit mittlerer Dichte verwendet werden oder auch LDPE. Der Anteil an Polyolefin beträgt 10-30 %, wobei Gehalte von 15-25 Gew.-%, insbesondere 20 - 25 Gew.-%, besonders bevorzugt sind. Es können auch recycelte Polyolefine verwendet werden, die z.B. aus Verbundmaterialien, Flaschenkastenmahlgut oder hochmolekularem HDPE gewonnen werden.

Gemäß einer besonders bevorzugten Ausführungsform der erfindungsgemäßen Spritzpressmasse eines Formkörpers wird der verwendeten Polyester-Mischung neben Ethylen-Glycidylmethacrylat Copolymer auch Ethylen-Vinylacetat Copolymer zugemischt. Ein Gesamtanteil beider Copolymeren von 2 - 8 Gew.-%, insbesondere 3,5 - 6,5 Gew.-%, ist besonders vorteilhaft. Die Verwendung der beiden Copolymere in Kombination bewirkt einen synergistischen Effekt, der sich sowohl in einer verbesserten Verarbeitbarkeit der plastifizierten Masse als auch in verbesserten Materialeigenschaften der hergestellten Formkörper niederschlägt. Insbesondere läßt sich durch die reaktive Kompoundierung unter gleichzeitiger Verwendung der beiden genannten Copolymer-Komponenten eine stärkere Durchmischung der einzelnen Bestandteile der Polyester-Mischung erreichen, so daß die hergestellten Formkörper eine verbesserte Verteilung der einzelnen Bestandteile aufweisen. Eine einheitliche Verteilung der einzelnen Bestandteile ist besonders wünschenswert, um unerwünschte Anisotropie-Effekte weitestgehend zu unterdrücken.

Gemäß einer bevorzugten Ausführungsform enthält die Polyester-Mischung 1-8 Gew.-% Ethylen-Glycidylmethacrylat Copolymer. Besonders bevorzugt sind Polyester-Mischungen, die 2 - 6 Gew.-%, insbesondere 2,5-4 Gew.-%, Ethylen-Glycidylmethacrylat Copolymer enthalten. Von besonderem Vorteil ist es, daß sich bereits mit diesen relativ geringen Anteilen von kleiner als 8 Gew.-% des im Vergleich zur Polyester-Mischung relativ teuren Ethylen-Glycidylmethacrylat Copolymers eine reaktive Kompoundierung der Polyester-Mischung bewirken läßt, wobei vorteilhafterweise zum einen die Stabilisierung der Polyester-Mischung erfolgt, und zum anderen das Fließverhalten der plastifizierten Masse verändert wird.

Gemäß einer weiteren bevorzugten Ausführungsform der erfindungsgemäßen Spritzpressmasse zum Spritzpressen eines Formkörpers enthält die verwendete Polyester-Mischung 0,5-3 Gew.-% Ethylen-Vinylacetat Copolymer. Besonders bevorzugt sind Anteile von 1-2,5 Gew.-% Ethylen-Vinylacetat Copolymer. Das Ethylen-Vinylacetat Copolymer bewirkt in Kombination mit dem Ethylen-Glycidylmethacrylat Copolymer eine weitere Verbesserung der Materialeigenschaften des hergestellten Formkörpers. Dieser synergetische Effekt wird darauf zurückgeführt, daß die Wirkung der reaktiven Kompoundierung mit Ethylen-Glycidylmethacrylat Copolymer verstärkt wird und Formkörper mit einer noch einheitlicheren Verteilung der einzelnen Bestandteile erhalten werden, die besonders schlagfest sind und eine hervorragende Festigkeit haben.

Nach einer weiteren bevorzugten Ausführungsform enthält die erfindungsgemäße Spritzpressmasse zum Spritzpressen eines Formkörpers ferner 0,1-1 Gew.-% Kettenverzweiger bzw. Viskositätserhöher, wobei ein Anteil von mindestens 0,5 Gew.-% besonders bevorzugt ist Als Kettenverzweiger bzw. Viskositätserhöher eignen sich besonders Mono- und Poly-Carbonsäure-mono- und polyanhydride, Bis-oxazoline, Bis-caprolactame, Bis-isocyanate, Bis-imidazoline, Bis-oxazine, Bis-epoxide, Bis-amine, Polyamine, Bis-thiazoline, Bis-N-acylaziridine, Bis-iminocarbonate und Carbodiimide, insbesondere Mono- und Poly-Carbonsäure-mono- und polyanhydride, Bis-oxazoline und Bis-caprolactame. Besonders bevorzugt sind Benzol-1,2,4,5-tetracarbonsäure- 1,2,4,5-dianhydrid (Pyromellithsäuredianhydrid, PMDA), 1,4-Phenylen-bisoxazolin oder Carbonyl-bis-caprolactamat sowie deren Derivate oder ähnliche Verbindungen. Die Kettenverzweiger oder-verbinder bzw. -verlängerer können einzeln oder in Kombination miteinander verwendet werden. Durch die Verwendung dieser zusätzlichen Komponenten läßt sich die Viskosität der thermoplastischen Masse erhöhen und eine stärkere Verzweigung in den hergestellten Formkörpern erreichen. Dies wirkt sich äußerst positiv auf das Eigenschaftprofil der hergestellten Formkörper aus. Die Verwendung von Kettenverzweigern ist insbesondere dann von großem Vorteil, wenn recycelte Kunstoffmaterialien, wie z.B. Sekundärprodukte aus recyceltem Polyester, oder recycelte Polyolefine bei der erfindungsgemäßen Spritzpressmasse zum Spritzpressen eines Formkörpers verwendet werden, da sich die Verschlechterung der Eigenschaften der resultierenden Formkörper durch im recyceltem Ausgangsmaterial enthaltene Verunreinigungen durch die Verwendung der Kettenverzweiger kompensieren läßt. Überraschenderweise bewirkt der Kettenverzweiger neben einer Erhöhung der Kerbschlagzähigkeit gleichzeitig auch eine Erhöhung des Elastizitätsmoduls und der Biegefestigkeit der resultierenden Formkörper. Die Verbesserung der Eigenschaften der resultierenden Formkörper ist selbstverständlich aber auch bei der Verwendung reiner Ausgangsmaterialien von Vorteil, wenn es gilt besonders anspruchsvolle Formkörper mit hervorragendem Eigenschaftsprofil herzustellen.

Vorteilhaft ist es auch, der verwendeten Polyester-Mischung bis zu 3 % Schäummittel und/oder bis zu 1 % weitere Additive zuzusetzen. Als Additive kommen insbesondere Oxidationsstabilisatoren, UV-Stabilisatoren, Färbemittel, Antistatika, Flammschutzmittel und/oder organische Phosphor-Verbindungen in Betracht. Organische Phosphor-Verbindungen, wie zum Beispiel Triphenylphosphit, haben den Vorteil, daß sie antimon- oder titan-haltige Katalysatorreste abfangen und somit eventuell mögliche katalytisch aktivierte Abbaureaktionen inhibieren.

Nach einer weiteren bevorzugten Ausführungsform der erfindungsgemäßen Spritzpressmasse zum Spritzpressen eines Formkörpers sind der Polyester-Mischung bis zu 40 % anorganische Füllmaterialien, wie zum Beispiel Glasfasern, CaCO₃, Glimmer oder Asche zugesetzt. Durch den Zusatz von Glasfasern läßt sich beispielsweise die Festigkeit der hergestellten Formkörper weiter verbessern. Andere anorganische Füllmaterialien, wie zum Beispiel CaCO₃, können dazu dienen, dort wo es möglich ist, die Kosten für einen mit der erfindungsgemäßen Spritzpressmasse hergestellten Formkörper zu senken.

Nach einer besonders bevorzugten Ausführungsform der erfindungsgemäßen Spritzpressmasse zum Spritzpressen eines Formkörpers enthält die verwendete Polyester-Mischung 5-40 Gew.% Glasfasern, wobei ein Anteil von 10-30 %, insbesondere 20 - 25 %, Glasfasern besonders bevorzugt ist. Durch den Zusatz von Glasfasern läßt sich die Festigkeit der hergestellten Formkörper und insbesondere deren Biegesteifigkeit weiter verbessern.

Die mit der erfindungsgemäßen Spritzpressmasse zum Spritzpressen eines Formkörpers hergestellten Formkörper zeichnen sich insbesondere durch eine hohe Festigkeit und eine sehr gute Schlagzähigkeit aus. Dies ist insbesondere für Formkörper von Vorteil, die bei ihrem Gebrauch in der Regel Schlägen, Erschütterungen oder sonstigen mechanischen Beanspruchungen ausgesetzt sind, wie dies zum Beispiel bei Paletten der Fall ist. Paletten, die aus der erfindungsgemäßen Spritzpressmasse hergestellt wurden, zeichnen sich dadurch aus, daß sie auch in leichter Ausführung besonders stoßunempfindlich und formstabil sind. Ein weiteres bevorzugtes Einsatzgebiet für die aus der erfindungsgemäßen Spritzpressmasse hergestellten Formkörper sind Komposter, Kisten, Schalungsplatten und Multi-Carrier-Systeme, da die hergestellten Formkörper ferner eine gute Beständigkeit gegen eine Vielzahl von auftretenden Umwelteinflüssen, wie zum Beispiel Witterungseinfüsse, aufweisen.

Ein weiterer Gegenstand der Erfindung ist ein Formkörper, der aus der erfindungsgemäßen Spritzpressmasse zum Spritzpressen eines Formkörpers hergestellt werden kann.

Aus der erfindungsgemäßen Spritzpressmasse zum Spritzpressen eines Formkörpers lassen sich Formkörper mit einer Charpy-Schlagzähigkeit von mindestens 40 mJ/mm², aus einer Polyestermischung mit
folgenden Bestandteilen in Gewichtsprozent erhalten
60 - 80 % Polyester,
10 - 30 % Polyolefm,
1- 10 % Ethylen-Glycidylmethacrylat Copolymer,
0 - 3 % Ethylen-Vinylacetat Copolymer,
0 - 2 % Kettenverzweiger bzw. Viskositätserhöher,
   und
0,5 -15 % thermoplastisches Elastomer auf metallocen-Olefinbasis
die zusätzlich bis zu 1 % Additive, bis zu 3 % Schäummittel und bis zu 40 % anorganische Füllmaterialien enthalten kann, wobei der Formkörper ein E-Modul von mindestens 930 MPa, und eine Biegefestigkeit von mindestens 29 MPa aufweist.

In der Regel lässt sich eine Eigenschaft eines Formkörpers nur verbessern, wenn gleichzeitig eine andere Eigenschaft verschlechtert wird.
Durch das komplexe Zusammenspiel der einzelnen Komponenten der Polyestermischung und die Anwendung des Verfahrens zum Spritzpressen eines Formkörpers gelingt es hier jedoch Formkörper zu erhalten, die eine drastisch verbesserte Schlagzähigkeit bei gleichzeitig guten Werten für die Biegefestigkeit und das Elastizitätsmodul aufweisen.

Nach einer weiteren bevorzugten Ausführungsform der Formkörper ist die intrinsische Viskosität der Polyestermischung größer als 0,65 dl/g, insbesondere größer als 0,7 dl/g.

Der Schmelzindex MFI der Polyestermischung bei 285 °C und 2,16 kg Gewicht ist bevorzugt kleiner als 25 g /10 min, besonders kleiner als 20 g /10 min, insbesondere kleiner als 10 g /10 min.

Der erfindungsgemäße Formkörper weist eine Charpy-Schlagzähigkeit von mindestens 40 mJ/mm² auf, und bevorzugterweise größer als 50 mJ/mm², insbesondere größer 60 mJ/mm².

Paletten oder Komposter aus einem der erfindnungsgemäßen Formkörper weisen die bereits beschriebenen hervorragenden Eigenschaften auf.

Die Paletten eignen sich beispielsweise zum Einsatz im Hochregallager, da sie neben einer hervorragenden Schlagzähigkeit auch ein gutes Elastizitätsmodul besitzen.

Die Erfindung wird nachstehend anhand von Beispielen näher beschrieben.

### Beispiel 1 (nicht Gegenstand der Erfindung)

Polyethylenterephthalat (PET) wurde bei 160°C 5 Stunden in einem Trockenlufttrockner getrocknet. Die mit der coulometrischen Karl-Fischer Methode gemessene Restfeuchte betrug 50 ppm. 3,75 kg dieses PET (75 Gew.-%) wurden dann unter Stickstoffatmosphäre in einem verschließbaren Behältnis mit 1 kg HDPE (20 Gew.-%) und 0,25 kg Ethylen-Glycidylmethacrylat (E-GMA) (5 Gew.-%) intensiv gemischt. Dieses Gemisch wurde in den mit Stickstoff gespülten Trichter einer Labor-Spritz-Preßmaschine mit 5 kg Durchsatz /h gegeben. Die Extruderschnecke hat einen Durchmesser von 25 mm und eine Länge von 30 D. Die Mischung wird bei 280°C Massetemperatur plastifiziert und nach dem Extruder in einen Zylinder mit Kolben gedrückt. Bei Erreichen der notwendigen Masse an Material wird es mit 40 - 80 bar in das Plattenwerkzeug gedrückt. Die Presse schließt, und mit einem Gegendruck der Presse von 200 bar wird die Platte bei 5°C Werkzeugtemperatur abgekühlt und nach einer Preßzeit von 30 Sekunden ausgeworfen.

Aus der so hergestellten DIN A5-Platte wurde ein Prüfkörper gefräßt, mit dem die Charpy-Schlagzähigkeit bestimmt wurde. Sie beträgt 5,36 mJ/mm².

Um ein Maß für den Grad des Abbaus der Polyester-Komponente in der Polyester-Mischung zu erhalten, wurde die intrinsische Viskosität gemessen. Dazu wurde eine Probe der DIN A5-Platte gemahlen und 1 g in 100 g Dichloressigsäure unter Erwärmen gerührt. Die ungelösten Polyolefin Bestandteile wurden durch eine D4 Glasfritte abfiltriert und getrocknet zurückgewogen. Der Rückstand wurde bei der Berechnung der Konzentration abgezogen. Die IV-Werte wurden mit einem Ubblelohde-Viskosimeter mit dieser Lösung bei 25°C gemessen. Es ergibt sich ein IV-Wert von 0,74 dl/g.

Die Fließeigenschaften der verwendeten Polyester-Mischung wurden durch Bestimmung des Schmelzindex gemessen. Dazu wurden die Proben vorher gemahlen und im Trockenschrank bei 160°C bis auf 50 ppm Restfeuchte getrocknet Der MFI-Wert beträgt 5,4 g/10 min bei 285°C und 2,16 kg Gewicht.

### Vergleichsbeispiel 1 (nicht Gegenstand der Erfindung)

Polyethylenterephthalat wurde wie unter Beispiel 1 beschrieben getrocknet und mit HDPE und dem Verträglichmacher Bennet BRC 100 intensiv gemischt, so daß eine Zusammensetzung erhalten wurde, die 75 Gew.-% PET, 20 Gew.-% HDPE und 5 Gew.-% Bennet BRC 100 enthält Die weitere Verarbeitung erfolgt unter denselben Bedingungen wie für Beispiel 1.

Die Charpy-Schlagzähigkeit beträgt 23,8 mJ/mm².

Der IV-Wert beträgt 0,62 dl/g und der MFI-Wert beträgt 106 g/10 min bei denselben Bedingungen wie unter Beispiel 1 angegeben.

Es zeigt sich, daß die Verwendung von Ethylen-Glycidylmethacrylat Copolymer der Verwendung eines nicht-reaktiven herkömmlichen Verträglichmachers (Vergleichsbeispiel) eine deutliche Verbesserung der Schlagzähigkeit der resultierenden Produkte bewirkt. Die reaktive Kompoundierung mit Ethylen-Glycidylmethacrylat Copolymer führt ferner zu einer weitgehenden Stabilisierung der Polyester-Komponente in der Polyester-Mischung, was an der nur geringfügigen Abnahme des IV-Wertes zu beobachten ist. Der zum Vergleich gemessene IV-Wert für das Ausgangs-Polyethylenterephthalat beträgt 0,75 dl/g. Dem gegenüber zeigt sich bei der Verwendung eines herkömmlichen nicht-reaktiven Verträglichmachers gemäß dem Vergleichsbeispiel eine deutliche Abnahme des IV-Wertes.

Gleichzeitig werden durch die reaktive Kompoundierung die rheologischen Fließeigenschaften der Schmelze gegenüber der unreaktiven Kompatibilisierung deutlich verändert. Dies drückt der MFI-Wert aus. Ein niedrigerer MFI-Wert bedeutet, daß die Schmelze dickflüssiger ist, was beim Verpressen vorteilhaft ist, da dünnflüssige Schmelzen sich schwieriger verarbeiten lassen. Gleichzeitig ist der MFI-Wert auch ein Maß für die Stabilisierung der Polyester-Komponente, denn ein niedrigerer MFI-Wert korrespondiert mit einem höheren Wert für das Zahlenmittel der Molmassen und somit mit einer verbesserten Stabilisierung der Polyesterkomponente, d.h. einer Reduzierung der Abbaureaktionen.

### Beispiel 2 - 4 sowie 6 - 7 (nicht Gegenstand der Erfindung);Beispiel 5 (Erfindung); Vergleichsbeispiel 2 (nicht Gegenstand der Erfindung)

Polyethylenterephthalat wurde wie unter Beispiel 1 beschrieben getrocknet und mit Polyethylen und einem Verträglichmacher sowie gegebenenfalls weiteren Komponenten intensiv gemischt, so dass die in Tabelle 1 angegebenen Zusammensetzungen erhalten wurden. Die weitere Verarbeitung erfolgte unter denselben Bedingungen wie unter Beispiel 1 beschrieben.

Von den so hergestellten Platten wurden folgende Werte gemessen:
Elastizitätsmodul [MPa] und Biegefestigkeit [MPa] gemäß ISO 178 und die Kerbschlagzähigkeit [mJ/mm²] gemäß ISO 179 leA.

**Tabelle 1:**

| Bsp. | Zusammensetzung | E-Modul | Biegefestigkeit | Kerbschlagzähigkeit |
|---|---|---|---|---|
| | [Gew.-%] | [MPa] | [MPa] | [mJ/mm²] |
| | | | | |
| | Vergleichsbeispiel2: | 2200 | 53,9 | 2,51 |
| | 100%PET | | | |
| 1 | 75 % PET | 1650 | 50,1 | 5,36 |
| | 20 % HDPE | | | |
| | 5%E-GMA | | | |
| 2 | 65 % PET | 1530 | 43,5 | 7,06 |
| | 30% HDPE | | | |
| | 5% E-GMA | | | |
| 3 | 70 % PET | | | 11,2 |
| | 19% HDPE | | | |
| | 4 % E-GMA | | | |
| | 7 % EPM | | | |
| 4 | *65* % PET | 1201 | 35,2 | 15,2 |
| | 20 % HDPE | | | |
| | *5* % E-GMA | | | |
| | 10 % EPM | | | |
| *5* | *65* % PET | 935,5 | 29,3 | 90,0* |
| | 20 % HDPE | | | |
| | 5 % E-GMA 5 % E-GMA | | | *=gemessen mit einem 4 J - Pendel (Kein Bruch bei einem 1 J - Pendel) |
| | 10%Engage™8180 | | | |
| *6* | 64 % PET DSD bunt | 936,2 | 25,3 | 8,1 |
| | 20 % HDPE | | | |
| | 6 % E-GMA | | | |
| | 10% EPM | | | |
| *7* | 64,5 % PET DSD bunt | 1173 | 32,6 | 9,9 |
| | 20 % HDPE | | | |
| | 5 % E-GMA | | | |
| | 10%EPM | | | |
| | 0,5 % PMDA | | | |
| 8 | 64,5 % PET DSD bunt | 1121 | 35,9 | 11,4 |
| | 20 % HDPE | | | |
| | 5 % E-GMA | | | |
| | 10%Engage8180 | | | |
| | 0,5 % PMDA | | | |
| | | | | |

Die Beispiele zeigen, dass sich Platten erhalten lassen, die eine hervorragende Schlagzähigkeit bei gleichzeitig gutem Elastizitätsmodul und guter Biegefestigkeit aufweisen. Durch die erfindungsgemäße Zugabe von thermoplastischen Elastomeren, dem Engage™ 8180, gelingt es, die Kerbschlagzähigkeit drastisch zu steigern, wobei das Elastizitätsmodul und die Biegefestigkeit auf einem zufriedenstellenden Maß gehalten werden können. Durch Zugabe von Kettenverzweiger lassen sich die Eigenschaften der Platten weiter verbessern. Der Kettenvetzweiger bewirkt eine Erhöhung der Kerb Schlagzähigkeit bei gleichzeitiger Anhebung der Werte für das E-Modul und die Biegefestigkeit Auf diese Weise gelingt es bei Verwendung recyclter Sekundärmaterialien, wie z.B. PET DSD bunt, die Eigenschaften der Platten deutlich zu verbessern, so daß deren Qualität an die Qualität der mit reinem bzw. sehr sauberem PET hergestellten Platten heranreicht. So lassen sich mit Hilfe der erfindnungsgemäßen Spritzpressmasse zum Spritzpressen eines Formkörpers auch aus Recycling-Materialien hervorragende Formkörper gewinnen.

## Patentansprüche

1. Spritzpressmasse, welche eine Polyestermischung mit folgenden Bestandteilen in Gewichtsprozent ist:
60 - 80 % Polyester,
10 - 30 % Polyolefin,
1 - 10 % Ethylen-Glycidylmethacrylat Copolymer,
0 - 3 % Ethylen-Vinylacetat Copolymer,
0 - 2 % Kettenverzweiger bzw. Viskositätserhöher
**dadurch gekennzeichnet, dass** die Masse 0,5-15 Gew.-% thermoplastisches Elastomer auf metallocen-Olefinbasis enthält und eine Charpy - Schlagzähigkeit von mindestens 40 m]/mm² aufweist.

2. Spritzpressmasse nach Anspruch 1, **dadurch gekennzeichnet, dass** der Masse zusätzlich
bis zu 1 % Additive,
bis zu 3 % Schäummittel und
bis zu 40 % anorganische Füllmaterialien
zugesetzt werden.

3. Spritzpressmasse nach Anspruch 1 und/oder 2, **dadurch gekennzeichnet, dass** die Masse Ethylen-Glycidylmethacrylat Copolymer und Ethylen-Vinylacetat Copolymer nebeneinander enthält, wobei der Gesamtanteil beider Copolymeren 8 Gew.-% nicht übersteigt.

4. Spritzpressmasse nach einem der vorhergehenden Ansprüche, **dadurch gekennzeichnet, dass** die Masse 0,5 - 3 Gew.-%, insbesondere 1 -2,5 Gew.-%, Ethylen-Vinylacetat Copolymer enthält.

5. Spritzpressmasse nach einem der vorstehenden Ansprüche, **dadurch gekennzeichnet, dass** die Masse 1 bis 10 Gew.-% thermoplastisches Elastomer auf metallocen-Olefinbasis enthält.

6. Spritzpressmasse nach einem der vorstehenden Ansprüche, **dadurch gekennzeichnet, dass** das Polyester und/oder das Polyolefin recycelte Kunststoffmaterialien sind.

7. Spritzpressmasse nach einem der vorstehenden Ansprüche, **dadurch gekennzeichnet, dass** die Masse 0,1 - 1 Gew.-%, insbesondere 0,5 - 1 Gew.-%, Kettenverzweiger bzw. Viskositätserhöher enthält.

8. Spritzpressmasse nach einem der vorstehenden Ansprüche, **dadurch gekennzeichnet, dass** die Masse mindestens eine der folgenden Verbindungen oder deren Derivate als Kettenverzweiger bzw. Viskositätserhöher enthält : Mono- und Poly-Carbonsäure-mono- und polyanhydride, insbesondere Pyromellithsäuredianhydrid; Bis-oxazoline, insbesondere 1,4-Phenylen-bisoxazolin; Bis-caprolactame, insbesondere Carbonyl-bis-caprolactamat; Bis-isocyanate; Bis-imidazoline; Bis-oxazine; Bis-epoxide; Bis-amine; Polyamine; Bis-thiazoline; Bis-N-acrylaziridine, Bis-iminocarbonate und Carbidiimide, insbesondere Mono- und Poly-Carbonsäure-mono- und polyanhydride, Bis-oxazoline und Biscaprolactame.

9. Spritzpressmasse nach einem der vorstehenden Ansprüche, **dadurch gekennzeichnet, dass** die Masse Oxidationsstabilisatoren, UV-Stabilisatoren, Färbemittel, Antistatika, Flammschutzmittel und/oder organische Phosphor-Verbindungen als Additive enthält.

10. Spritzpressmasse nach einem der vorstehenden Ansprüche, **dadurch gekennzeichnet, dass** die Masse Glasfasern und/oder CaCO₃ als anorganische Füllmaterialien enthält.

11. Spritzgepreßter Formkörper mit einer Charpy-Schlagzähigkeit von mindestens 40 mJ/mm² aus einer Polyestermischung mit folgenden Bestandteilen in Gewichtsprozent:
60 - 80 % Polyester,
10 - 30 % Polyolefin,
1 - 10 % Ethylen-Glycidylmethacrylat Copolymer,
0 - 3 % Ethylen-Vinylacetat Copolymer,
0 - 2 % Kettenverzweiger bzw. Viskositätserhöher,
und
0,5- 15 % thermoplastisches Elastomer auf metallocen-Olefinbasis.

12. Spritzgepreßter Formkörper nach Anspruch 11, **dadurch gekennzeichnet, dass** die intrinsische Viskosität der Polyestermischung größer als 0,65 dl/g, insbesondere größer als 0,7 dl/g, ist.

13. Spritzgepresster Formkörper nach einem der Ansprüche 11 und/oder 12, **dadurch gekennzeichnet, dass** der Schmelzindex MFI der Polyestermischung kleiner als 25g/10 min, insbesondere kleiner als 10g/10 min, ist.

14. Spritzgepreßter Formkörper nach einem der Ansprüche 11 bis 13, **dadurch gekennzeichnet, dass** die Charpy-Schlagzähigkeit mindestens 50 mJ/mm² , insbesondere größer 60 mJ/mm², ist.

15. Spritzgepreßter Formkörper nach einem der Ansprüche 11 bis 14, **dadurch gekennzeichnet, dass** der Formkörper eine Palette oder ein Komposter ist.

16. Spritzgepreßter Formkörper nach Anspruch 15, **dadurch gekennzeichnet, dass** der Formkörper ein E-Modul von mindestens 930 Mpa, und eine Biegefestigkeit von mindestens 29 Mpa aufweist.

## Claims

1. A transfer molding compound which is a polyester mixture with the following ingredients in weight percent:
60-80 % polyester
10-30% polyolefin,
1-10 % ethylene glycidyl methacrylate copolymer,
0-3 % ethylene vinyl acetate copolymer,
0-2 % chain branching compound or viscosity enhancer
**characterized in that** the compound contains 0.5-15 weight% of a metallocene-olefin based thermoplastic elastomer and that it has a Charpy impact strength of at least 40 mJ/mm².

2. A transfer molding compound according to claim 1, **characterized in that** added to the compound are
up to 1% additives
up to 3% foamants and
up to 40% inorganic fillers.

3. A transfer molding compound according to claim 1 and/or 2, **characterized in that** the compound contains ethylene glycidyl methacrylate copolymer and ethylene vinyl acetate copolymer side by side, wherein the total fraction of both copolymers does not exceed 8 weight%.

4. A transfer molding compound according to one of the previous claims, **characterized in that** the compound contains 0.5 - 3 weight%, in particular 1 - 2.5 weight%, of ethylene vinyl acetate copolymer.

5. A transfer molding compound according to one of the previous claims, **characterized in that** the compound contains 1 to 10 weight% of a metallocene-olefin based thermoplastic elastomer.

6. A transfer molding compound according to one of the previous claims, **characterized in that** the polyester and/or the polyolefin are recycled plastic materials.

7. A transfer molding compound according to one of the previous claims, **characterized in that** the compound contains 0.1-1 weight%, in particular 0.5-1 weight%, of a chain branching compound or viscosity enhancer.

8. A transfer molding compound according to one of the previous claims, **characterized in that** the compound contains at least one of the following compounds or derivatives thereof as a chain branching compound or viscosity enhancer: mono and polycarboxylic acid mono and polyanhydrides, in particular pyromellitic acid dianhydride; bis-oxazolines, in particular 1,4-phenylene bis-oxazoline; bis-caprolactams, in particular carbonyl-bis-caprolactamate; bis-isocyanates, bis-imidazolines; bis-oxazines; bis-epoxides; bis-amines; polyamines; bis-thiazolines; bis-N-acryl-aziridines, bis-iminocarbonates and carbidiimides, in particular mono and polycarboxylic acid mono and polyanhydrides, bis-oxazolines and bis-caprolactams.

9. A transfer molding compound according to one of the previous claims, **characterized in that** the compound contains oxidation stabilizers, UV stabilizers, pigments, antistatic agents, flame retardants and/or organic phosphor compounds as additives.

10. A transfer molding compound according to one of the previous claims, **characterized in that** the compound contains glass fibers and/or CaCO₃ as inorganic fillers.

11. Transfer molded parts with a Charpy impact strength of at least 40 mJ/mm² made of a polyester mixture with the following ingredients in weight percent:
60-80 % polyester
10-30% polyolefin,
1-10 % ethylene glycidyl methacrylate copolymer,
0-3 % ethylene vinyl acetate copolymer,
0-2 % chain branching compound or viscosity enhancer,
and
0.5-15% metallocene-olefin based thermoplastic elastomer.

12. Transfer molded parts according to claim 11, **characterized in that** the intrinsic viscosity of the polyester mixture is greater than 0.65 dl/g, in particular greater than 0.7 dl/g.

13. Transfer molded parts according to one of claims 11 and/or 12, **characterized in that** the MFI melt index of the polyester mixture is less than 25g/10 min, in particular less than 10g/10 min.

14. Transfer molded parts according to one of claims 11 through 13, **characterized in that** the Charpy impact strength is at least 50 mJ/mm², and in particular is greater than 60 mJ/mm².

15. Transfer molded parts according to one of claims 11 through 14, **characterized in that** the molded part is a pallet or a composter.

16. Transfer molded parts according to claim 15, **characterized in that** the molded part has a modulus of elasticity of at least 930 Mpa and a bending strength of at least 29 Mpa.

## Revendications

1. Mélange pour moulage par transfert, qui est un mélange de polyesters contenant les composants suivants :
60 - 80 % de polyester,
10 - 30 % de polyoléfine,
1 - 10 % de copolymère de méthacrylate de glycidyle éthylénique,
0 -3 % de copolymère de vinylacétate éthylénique,
0 - 2 % d'agent de ramification de la chaîne ou d'agent d'augmentation de la viscosité,
**caractérisé en ce que** la masse contient une part de 0,5 - 15 pourcents de son poids d'élastomère thermoplastique à base d'oléfine métallocène et qu'elle présente une résilience Charpy d'au moins 40 mJ /mm².

2. Mélange pour moulage par transfert selon la revendication de brevet 1, **caractérisé en ce que** sont additionnés à la masse
Jusqu'à 1 % d'additifs,
Jusqu'à 3 % d'agent moussant,
Jusqu'à 40 % de matières de remplissage anorganiques.

3. Mélange pour moulage par transfert selon la/les revendication(s) de brevet 1 et/ou 2, **caractérisé en ce que** la masse contient des copolymères de méthacrylate de glycidyle éthylénique et des copolymères de vinylacétate éthylénique voisins, sachant que la teneur totale des deux copolymères ne dépasse pas 8 pourcents du poids.

4. Mélange pour moulage par transfert selon l'une quelconque des revendications de brevet précédentes, **caractérisé en ce que** la masse contient une part de 0,5 - 3 pourcents de son poids, notamment 1 - 2,5 pourcents de son poids, de copolymère de vinylacétate-éthylène.

5. Mélange pour moulage par transfert selon l'une quelconque des revendications de brevet précédentes, **caractérisé en ce que** la masse contient 1 - 10 pourcents de son poids d'élastomère thermoplastique à base d'oléfine métallocène.

6. Mélange pour moulage par transfert selon l'une quelconque des revendications de brevet précédentes, **caractérisé en ce que** le polyester et/ou la polyoléfine sont des matières synthétiques recyclées.

7. Mélange pour moulage par transfert selon l'une quelconque des revendications de brevet précédentes, **caractérisé en ce que** la masse contient un pourcentage en poids de 0,1 - 1, notamment de 0,5 - 1, d'agent de ramification de la chaîne ou d'agent d'augmentation de la viscosité.

8. Mélange pour moulage par transfert selon l'une quelconque des revendications de brevet précédentes, **caractérisé en ce que** la masse contient au moins l'une des liaisons suivantes ou leurs dérivés comme agent de ramification de la chaîne ou agent d'augmentation de la viscosité : des monoanhydrides et des polyanhydrides monocarboxyliques et polycarboxyliques, notamment un dianhydride d'acide pyromellitique ; de la bis-oxazoline, notamment de la 1-4-phénylène-bis-oxazoline ; du bis-caprolactame, notamment du carbonyle-bis-caprolactame ; des bis-isocyanates ; des bis-imidazolines ; des bis-oxazines, des bis-époxydes ; des bis-amines ; des polyanines ; des bis-thiazolines ; des bis-N-aciridines ; des bis-N-iminocarbonates et des carbidiimides, notamment des monoanhydrides et des polyanhydrides monocarboxyliques et polycarboxyliques, de la bis-oxazoline et du bis-caprolactame.

9. Mélange pour moulage par transfert selon l'une quelconque des revendications de brevet précédentes, **caractérisé en ce que** la masse contient comme additifs des stabilisateurs d'oxydation, des stabilisateurs UV, des colorants, des agents antistatiques, des agents ignifuges et/ou des liaisons phosphoriques organiques.

10. Mélange pour moulage par transfert selon l'une quelconque des revendications de brevet précédentes, **caractérisé en ce que** la masse contient comme matières remplissage des fibres de verre et/ou du CaCO₃.

11. Moule façonné par transfert présentant une résilience Charpy d'au moins 40 mJ/mm², réalisé en un mélange de polyesters contenant les composants suivants en pourcentage du poids :
60 - 80 % de polyester,
10 - 30 % de polyoléfine,
1 - 10 % de copolymère de méthacrylate de glycidyle éthylénique,
0 -3 % de copolymère de vinylacétate éthylénique,
0 - 2 % d'agent de ramification de la chaîne ou d'agent d'augmentation de la viscosité,
et
0,5 - 15 % d'élastomère thermoplastique à base d'oléfine métallocène.

12. Moule façonné par transfert selon la revendication de brevet 11, **caractérisé en ce que** la viscosité intrinsèque du mélange de polyesters est supérieure à 0,65 dl/g, particulièrement à 0,7 dl/g.

13. Moule façonné par transfert selon la revendication de brevet 11 et/ou la revendication de brevet 12, **caractérisé en ce que** l'indice de fusion MFI du mélange de polyesters est inférieur à 25 g/10 min, particulièrement inférieur à 10 g/10 min.

14. Moule façonné par transfert selon l'une quelconque des revendications de brevet 11 à 13, **caractérisé en ce que** la résilience Charpy est au moins égale à 50 mJ/mm², particulièrement supérieure à 60 mJ/mm².

15. Moule façonné par transfert selon l'une quelconque des revendications de brevet 11 à 14, **caractérisé en ce que** le moule façonné est une palette ou un composteur.

16. Moule façonné par transfert selon la revendication de brevet 15, **caractérisé en ce que** le moule façonné est un module d'élasticité d'au moins 930 Mpa présentant une résistance à la flexion d'au moins 29 Mpa.
